# EUROPEAN PATENT APPLICATION

(11) **EP 2 343 913 A1**
(43) Date of publication of application: **13.07.2011**
(21) Application number: 09828623.0
(22) Date of filing: 20.11.2009
(51) Int. Cl.: H04W 4/06

(54) **METHOD, DEVICE AND SYSTEM FOR TARGET AREA FILTERING**

(30) Priority: 27.11.2008 CN 200810179088
(71) Applicant: Huawei Device Co., Ltd., Shenzhen, Guangdong 518129 (CN)
(72) Inventor: ZHANG, Huiping, Shenzhen Guangdong 518129 (CN); CHEN, Guojiao, Shenzhen Guangdong 518129 (CN); GAO, Wenmei, Shenzhen Guangdong 518129 (CN); YANG, Jian, Shenzhen Guangdong 518129 (CN); ZHANG, Chuxiong, Shenzhen Guangdong 518129 (CN)
(74) Representative: Charles, Glyndwr
(86) International application number: PCT/CN2009/075061
(87) International publication number: WO 2010/060363

(57) **Abstract**

A method, apparatus, and system for target area filtering are disclosed. The method includes: obtaining a target area and filtering time of service information; obtaining a location of a terminal at the filtering time; and executing target area filtering according to the terminal location and the target area location.

## Description

This application claims priority to Chinese Patent Application No. 200810179088.2, filed with the Chinese Patent Office on November 27, 2008 and entitled "METHOD, APPARATUS, AND SYSTEM FOR TARGET AREA FILTERING", which is incorporated herein by reference in its entirety.

### FIELD OF THE INVENTION

The present invention relates to a communications technology, and in particular, to a method, apparatus, and system for target area filtering.

### BACKGROUND OF THE INVENTION

As defined by the Open Mobile Alliance (OMA), the term "Mobile Broadcast" refers to a broad range of broadcast services, which jointly leverage the unidirectional one-to-many broadcast paradigm and the bidirectional unicast paradigm in a mobile environment, and covers one-to-many services ranging from classical broadcast to mobile multicast. OMA Broadcast Services (BCAST) is dedicated to service discovery, electronic program/service guide, charging, and content protection. It defines specific service enablers and assures that they are independent of the bearer layer. The service enablers defined by OMA BCAST integrate all Content Providers (CPs), Broadcast Distribution Systems (BDSs), and terminals in the system at the application layer, so that the system is independent of the lower layer network.

The CP provides service guides to users. The description information about services and content in service fragments and content fragments in a service guide can be provided to a terminal for local filtering. The information includes name, description, TargetUserProfile, and BroadcastArea. After the terminal receives the service guide, the terminal first compares the service and/or content description information in the service guide with the user filtering information stored on the terminal to filter services and content, so that the user may see what the user desires to see.

After the terminal receives the service guide, the terminal obtains the location of the terminal, compares the target area in the service guide with the location of the terminal to filter services in the service guide and obtain services that the user requests, and then receives information of the services requested by the user.

During the implementation of the present invention, the inventor finds the following weakness in the prior art. In the prior art, the terminal obtains the location of the terminal after receiving the service guide and then executes location filtering. This solution can realize filtering of the location where the terminal may only when the terminal receives services and/or content, so that target area filtering is not accurate.

### SUMMARY OF THE INVENTION

The objective of the embodiments of the present invention is to provide a method, apparatus, and system for target area filtering to realize accurate target area filtering.

In the prior art, because a terminal does not execute location filtering when the terminal accesses a service and/or content, the filtering is not in real time and as a result, target area filtering is not accurate. To resolve the issue, the embodiments of the present invention provide the following technical solution:

A method for target area filtering includes:
obtaining a target area and filtering time of service information;
obtaining a location of a terminal at the filtering time; and
executing target area filtering according to the terminal location and the target area location.

A method for sending target area filtering information includes:
creating a service guide which carries a target area and filtering time of service information; and
sending the service guide.

A broadcast apparatus includes:
a service guide creating unit, configured to create a service guide that carries a target area and filtering time of service information; and
a service guide sending unit, configured to send the service guide.

A terminal device includes:
a filtering information obtaining unit, configured to obtain a target area and filtering time of service information;
a location obtaining unit, configured to obtain a location of the terminal at the filtering time; and
a filtering unit, configured to execute target area filtering according to the terminal location and the target area location.

A broadcast system includes:
a server, configured to send a service guide which carries a target area and filtering time of service information; and
a terminal, configured to: obtain the target area and filtering time of service information, obtain a location of the terminal at the filtering time, and execute target area filtering according to the terminal location and the target area location.

The above technical solution provides the following benefit: The terminal obtains the filtering time, then obtains the location of the terminal at the filtering time, and then executes target area filtering. The target area filtering is executed when the terminal accesses the service information, so that filtering is realized in real time and that the target area filtering is accurate.

### BRIEF DESCRIPTION OF THE DRAWINGS

FIG. 1 illustrates a procedure of a method according to a first embodiment of the present invention;
FIG. 2 illustrates a procedure of a method according to a second embodiment of the present invention;
FIG. 3 illustrates a structure of a broadcast apparatus according to a fifth embodiment of the present invention;
FIG. 4 illustrates a structure of a terminal device according to a sixth embodiment of the present invention; and
FIG. 5 illustrates a structure of a broadcast system according to a seventh embodiment of the present invention.

### DETAILED DESCRIPTION OF THE EMBODIMENTS

The objective of the embodiments of the present invention is to provide a method, apparatus, and system for target area filtering so as to realize accurate target area filtering.

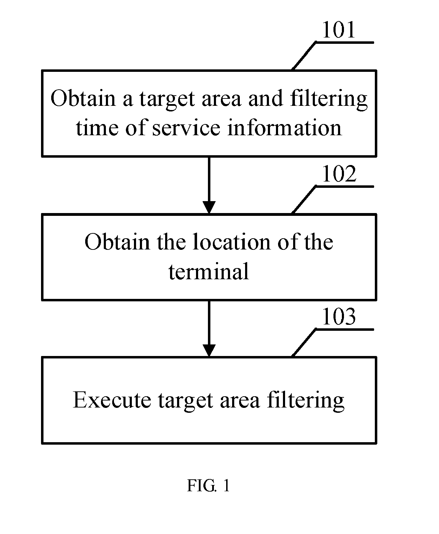

In the prior art, because the terminal does not execute location filtering when the terminal accesses a service and/or content, the filtering is not in real time and as a result, target area filtering is not accurate. A first embodiment of the present invention provides a method for target area filtering. As shown in FIG. 1, the method includes the following steps:
101. Obtain a target area and filtering time of service information.

The service information may be service information or content information that needs to be filtered. The embodiment of the present invention includes but is not limited to the above service information that may need to be filtered. For ease of understanding, the embodiments of the present invention will be described with respect to service information and content information respectively. The filtering time may be the time when the target area filtering is executed and may be a specified point or period of time. In the embodiments of the present invention, the presentation time is taken as an example. The presentation time may be the time when the user views content or the time of a presentation window (time when the window is presented), or it may be a specified point or period of time. It is understood that the above exemplary service information and filtering time are not exhaustive enumerations and do not constitute limitations to the present invention.
102. Obtain the location of the terminal at the filtering time.
103. Execute target area filtering according to the location of the terminal and the location of the target area.

In the above embodiment, the terminal obtains the filtering time, then obtains the location of the terminal at the filtering time, and then executes target area filtering. The target area filtering is executed when the terminal accesses the service information, so that filtering is realized in real time and that the target area filtering is accurate.

The obtaining of the filtering time in step 101 may be:
obtaining the presentation time that is related to the service information and the target area and carried in the service guide.

The obtaining of the presentation time that is related to the service information and the target area and carried in the service guide may be:
obtaining the presentation time that is related to the service information and the target area and carried in a schedule fragment of the service guide; or
obtaining the presentation time that is related to the service fragment and the target area and carried in a service fragment of the service guide; or
obtaining the presentation time that is related to the content fragment and the target area and carried in a content fragment of the service guide.

The obtaining of the filtering time in step 101 may be:
obtaining the presentation time that is related to the target area and carried in the service guide.

The obtaining of the presentation time that is related to the target area and carried in the service guide may be:
obtaining the presentation time that is related to the target area and carried in a service fragment of the service guide; or
obtaining the presentation time that is related to the target area and carried in a content fragment of the service guide.

How the presentation time or the presentation time related to the target area is carried will be described in detail. The presentation time or the presentation time related to the target area may be carried in many approaches. The above examples are not exhaustive enumerations and should not be understood as limitations to the present invention.

One application scenario of the above method will be described.

One department store expects people nearby during 16:00-18:00 to receive discount information. For this purpose, a target area will be defined in a corresponding discount advertisement in the service guide. The target area may cover the department store and a certain range of nearby places. To avoid the peak hours, the server generally distributes the ad early (for example, during 7:00-7:30) through file distribution. After receiving the ad content, a terminal may store the ad locally and present the ad to the user in the time period (16:00-18:00) specified in the service guide. According to the prior art, the filtering operation is performed during 7:00-7:30, and users receiving the ad are those around the department store when the ad is distributed (7:00-7:30). Therefore, the prior art does not support filtering of the future location, for example, the department store and nearby area during 16:00-18:00. In the embodiment of the present invention, the terminal obtains the presentation time (16:00-18:00) and then obtains the location of the terminal at the presentation time, and then executes target area filtering. Thus, filtering is realized in real time and the target area filtering is accurate. It is understood that the above application scenario is not the exhaustive enumeration of application scenarios of the present invention and should not be understood as a limitation to the present invention.

According to the above target area filtering method, an embodiment of the present invention provides a method on the broadcast apparatus side, and particularly, a method for sending target area filtering information, where the target area and filtering time are carried in service information of a service guide. The method includes:
creating a service guide which carries a target area and filtering time of service information; and sending the service guide.

Specifically, the target area and filtering time are carried by the following means:
The presentation time related to the service information and the target area is carried in the service guide.

More specifically, the presentation time related to the service information and the target area is carried in a schedule fragment of the service guide.

Or the presentation time related to the service fragment and the target area is carried in a service fragment of the service guide.

Or the presentation time related to the content fragment and the target area is carried in a content fragment of the service guide.

In the above method for sending target area filtering information, a target area and filtering time are carried in a service guide, so that the terminal can obtain the filtering time through the service guide, and then the terminal obtains the location of the terminal at the filtering time and executes target area filtering. The terminal executes target area filtering when it accesses service information, and thus filtering is realized in real time and target area filtering is accurate.

A second embodiment provides a method for carrying presentation time related to the target area in a schedule fragment of a service guide, where location filtering is triggered through a presentation window of the schedule fragment in the service guide. A location filtering condition may be related to the presentation window. When the time falls in the presentation window, the terminal compares the terminal location with the BroadcastArea (target area) in the broadcast content to determine whether to present the content or filter out the content.

As shown in Table 1, a BroadcastArea element and its sub-elements/attributes related to the presentation window may be added to the schedule fragment:

**Table 1 Modification to the schedule fragment**

| **Field** | **Element Level** | **Type** | **Quantity** | **Desciption** | **Data Type** |
|---|---|---|---|---|---|
| BroadcastArea | E | | | Broadcast area of broadcast content that carries location information. It may include the following attribute: polarity. It may include the following elements: TargetArea, and hor_acc. | |
| polarity | A | NO/TO | 0..1 | It indicates whether terminals in the related target area are expected to receive the content. If polarity = true, terminals within the related geographic arearea expected to receive the content. If polarity = false, terminals within the related geographic area are not expected to receive the content. | boolean |
| TargetArea | E3 | NO/TM | 0..N | Target area for content distribution. It may include the following elements: longitude, latitude, shape, cc, name_area, ZipCode, and CellTargetArea. | |
| longitude | E4 | NO/TM | 0..1 | Longitude of the target area. | integer |
| latitude | E4 | NO/TM | 0..1 | Latitude of the target area. | integer |
| shape | E4 | NO/TM | 0..1 | Shape of the target geographic area. | |
| cc | E4 | NO/TM | 0..1 | Country code of the target area. | unsignedShort |
| name_area | E4 | NO/TM | 0..N | Name of the target area. | String |
| ZipCode | E4 | NO/TM | 0..1 | Zip code of the target area. | String |
| CellTargetArea E4 | | NO/TM | 0..1 | Coverage area or minimum distribution area of a BDS. It may include the following attribute: type. It may include the following element: CellArea. | |
| type | A | NM/TM | 1 | Allowed values are: 0 - Unspecified 1 - 3GPP Cell Global Identifier 2 - 3GPP Routing Area Identifier (RAI) 3 - 3GPP Location Area Identifier (LAI) 4 - 3GPP Service Area Identifier (SAI) 5 - 3GPP MBMS Service Area Identity (MBMS SAI) 6 - 3GPP2 Subnet ID 7 - 255 others | unsignedByte |
| CellArea | E5 | NO/TM | 0..N | Specified distribution area of the BDS. It may include the following attribute: value. It may include the following element: PP2CellID. | |
| value | A | NM/TM | 1 | Value of Cell ID. | unsignedShort |
| PP2CellID | E6 | NO/TO | 0..N | If type = 4, its value is Sector_ID. If type = 5, 6, 7, or 8, its value is BASE ID. | positiveInteger |
| hor_acc | E3 | NO/TM | 0..N | Horizontal accuracy, measured in meters. | string |

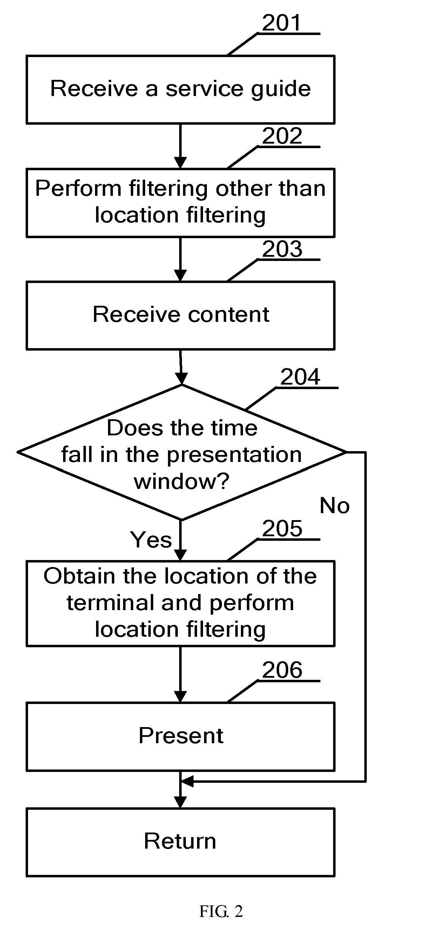

When the schedule fragment of the service guide carries a target area related to the presentation window, as shown in FIG. 2, the processing of the terminal includes:
201. The terminal receives the service guide which may include a service fragment, a content fragment, and a schedule fragment.
202. The terminal compares information other than location information (such as classification information) in the content fragment of the service guide with a user-defined filtering condition to perform filtering.
203. If the content fragment passes the filtering, the terminal can receive the content indicated by the content fragment. Steps 202 and 203 may be completed together with step 205 later, which will not impact the implementation of the embodiment of the present invention.
204. The terminal judges whether the current time falls in the presentation window; if so, the next step continues, or else, the procedure goes back.
205. When the time falls in the presentation window of the received content indicated by the related schedule fragment, the terminal first obtains the current location of the terminal and compares the current terminal location with the BroadcastArea in the schedule fragment to perform filtering.
206. If the received content passes the location filtering, the terminal presents the content. When this step is ended, the terminal may go back to step 201 to perform a new task.

In the above embodiment, the terminal first obtains the presentation time, then obtains the location of the terminal at the presentation time, and then executes target area filtering. The target area filtering is executed when the terminal accesses the service content, so that filtering is realized in real time and that the target area filtering is accurate.

A third embodiment of the present invention provides a method for obtaining presentation time that is related to the target area and carried in the service fragment of the service guide or obtaining presentation time that is related to the target area and carried in the content fragment of the service guide, where a timeRelated field may be extended in the service or content fragment and used to indicate whether the location filtering condition is related to the presentation window.

As shown in Table 2, a timeRelated field may be extended in the service or content fragment.

**Table 2 Modification to the service or content fragment**

| **Field** | **Element Level** | **Type** | **Quantity** | **Description** | **Data Type** |
|---|---|---|---|---|---|
| BroadcastArea | E1 | NO/TO | 0..1 | Broadcast area of broadcast content that carries location information. It may include the following attribute: timeRelated. | |
| timeRelated | A | NO/TO | 0..1 | It indicates whether the target area concerned is related to the presentation window in the schedule fragment. If timeRelated = true, location filtering must be performed when the time falls in the presentation window. If timeRelated = false, location filtering is not necessarily performed when the time falls in the presentation window. In this case, the method provided in the prior art can be used. | boolean |

If the timeRelated attribute of BroadcastArea in the content or service fragment is true, the terminal can first perform filtering based on other conditions and perform location filtering when the time falls in the presentation window defined in the schedule fragment related to the content or service fragment.

If the timeRelated attribute of BroadcastArea in the content or service fragment is false, the terminal can perform location filtering according to the prior art.

In the embodiment of the present invention, the terminal obtains the presentation time and then obtains the location of the terminal at the presentation time, and then executes target area filtering. Thus, filtering is realized in real time and the target area filtering is accurate.

A fourth embodiment of the present invention provides a method where filtering time information is extended in a location filtering condition and the terminal can perform real-time location filtering according to the filtering time. The fourth embodiment differs from the second and third embodiments in that the time information can be directly added to a location filtering condition without the need to relate it to other fragments, such as the schedule fragment.

Specifically, extending filtering time information in the location filtering condition may be extending filtering time in the service guide. Extending filtering time in the service fragment or content fragment of the service guide will be described as an example.

As shown in Table 3, a locationTime field is extended in the service or content fragment.

**Table 3 Modification to the service or content fragment**

| **Field** | **Element Level** | **Type** | **Quantity** | **Description** | **Data Type** |
|---|---|---|---|---|---|
| BroadcastArea | E1 | NO/ TO | 0..1 | Broadcast area of broadcast content that carries location information. It may include the following element: locationTime. | |
| locationTime | E2 | NO/ TO | 0..1 | Time to perform location filtering. The terminal begins obtaining location information for location filtering within the lo cationTime. It may include the following attributes: StartTime and EndTime. | |
| StartTime | A | NO/ TO | 0..1 | Start time of location filtering, indicating the earliest time when location filtering can be started. | unsignedInt |
| EndTime | A | NO/ TO | 0..1 | End time of location filtering, indicating the latest time when location filtering can be started. | unsignedInt |

After the terminal receives a content fragment that carries location information, if locationTime is null, the terminal can perform location filtering according to the prior art. If locationTime is not null, the terminal can filter information other than the location. When the time falls in the range of the locationTime, the terminal can obtain the current location and compare the location information with the filtering condition in the BroadcastArea field in the content fragment to perform location filtering.

In the above embodiment, the terminal obtains the filtering time, then obtains the location of the terminal at the filtering time, and then executes target area filtering. The target area filtering is executed when the terminal accesses the service content, so that filtering is realized in real time and that the target area filtering is accurate.

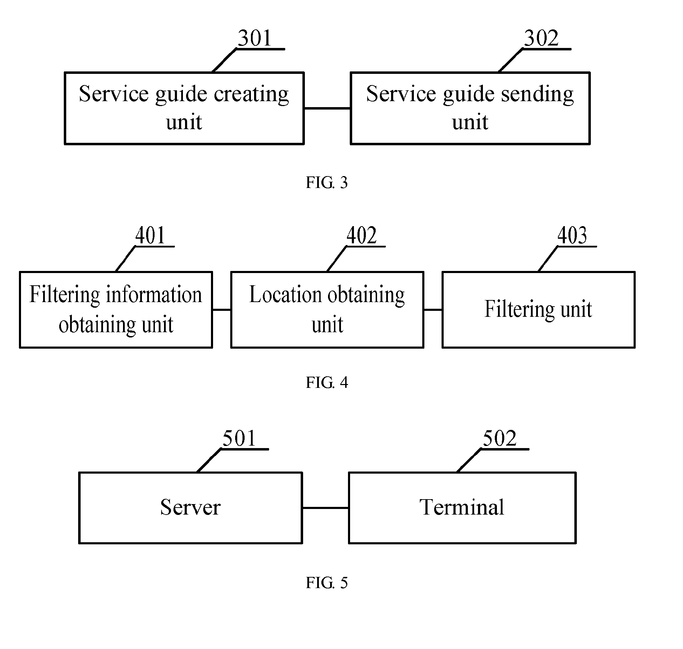

A fifth embodiment of the present invention provides a broadcast apparatus. As shown in FIG. 3, the broadcast apparatus includes:
a service guide creating unit 301, configured to create a service guide which carries a target area and filtering time of service information; and
a service guide sending unit 302, configured to send the service guide.

A sixth embodiment of the present invention provides a terminal device. As shown in FIG. 4, the terminal device includes:
a filtering information obtaining unit 401, configured to obtain a target area and filtering time of service information;
a location obtaining unit 402, configured to obtain the location of the terminal at the filtering time; and
a filtering unit 403, configured to execute target area filtering according to the location of the terminal and the location of the target area.

The terminal device in the above embodiment obtains the filtering time, then obtains the location of the terminal at the filtering time, and then executes target area filtering. The target area filtering is executed when the terminal accesses the service information, so that filtering is realized in real time and that the target area filtering is accurate.

A seventh embodiment of the present invention provides a broadcast system. As shown in FIG. 5, the broadcast system includes:
a server 501, configured to send a service guide which carries a target area and filtering time of service information; and
a terminal 502, configured to: obtain the target area and filtering time of service information, obtain the location of the terminal at the filtering time, and execute target area filtering according to the location of the terminal and the location of the target area.

In the system provided in the above embodiment, the terminal obtains the filtering time, then obtains the location of the terminal at the filtering time, and then executes target area filtering. The target area filtering is executed when the terminal accesses the service information, so that filtering is realized in real time and that the target area filtering is accurate.

Those skilled in the art understand that all or a part of the steps in the method provided by the foregoing embodiment of the present invention can be implemented by hardware under the instruction of a program. The program can be stored in a computer readable storage medium, such as a Read Only Memory (ROM), a magnetic disk, or a Compact Disk-Read Only Memory (CD-ROM).

Although the method, apparatus, and system for target area filtering have been described in detail through exemplary embodiments, the invention is not limited to such embodiments. It is apparent that those skilled in the art can make various modifications and variations to the invention without departing from the spirit and scope of the invention. The invention is intended to cover the modifications and variations provided that they fall within the scope of protection defined by the claims or their equivalents.

## Claims

1. A method for target area filtering, comprising:
obtaining a target area and filtering time of service information;
obtaining a location of a terminal at the filtering time; and
executing target area filtering according to the terminal location and the target area location.

2. The method according to claim 1, wherein the step of obtaining the filtering time of the service information comprises:
obtaining presentation time that is related to the service information and the target area and carried in a service guide.

3. The method according to claim 2, wherein the step of obtaining the presentation time that is related to the service information and the target area and carried in the service guide comprises:
obtaining presentation time that is related to the service information and the target area and carried in a schedule fragment of the service guide; or
obtaining presentation time that is related to a service fragment and the target area and carried in the service fragment of the service guide; or
obtaining presentation time that is related to a content fragment and the target area and carried in the content fragment of the service guide.

4. The method according to claim 1, wherein the step of obtaining the filtering time of the service information comprises:
obtaining filtering time that is related to the target area and carried in a service guide.

5. The method according to claim 4, wherein the step of obtaining the filtering time that is related to the target area and carried in the service guide comprises:
obtaining filtering time that is related to the target area and carried in a service fragment of the service guide; or
obtaining filtering time that is related to the target area and carried in a content fragment of the service guide.

6. The method according to any one of claims 1-5, wherein the target area comprises:
a target area indicated by at least one item of: longitude, latitude, shape of geographic area, country code, area name, and zip code.

7. A method for sending target area filtering information, comprising:
creating a service guide which carries a target area and filtering time of service information; and
sending the service guide.

8. A broadcast apparatus, comprising:
a service guide creating unit, configured to create a service guide that carries a target area and filtering time of service information; and
a service guide sending unit, configured to send the service guide.

9. A terminal device, comprising:
a filtering information obtaining unit, configured to obtain a target area and filtering time of service information;
a location obtaining unit, configured to obtain a location of the terminal at the filtering time; and
a filtering unit, configured to execute target area filtering according to the terminal location and the target area location.

10. A broadcast system, comprising:
a server, configured to send a service guide which carries a target area and filtering time of service information; and
a terminal, configured to: obtain the target area and the filtering time of the service information, obtain a location of the terminal at the filtering time, and execute target area filtering according to the terminal location and the target area location.
